Europäisches Patentamt

European Patent Office

Office européen des brevets

(19)

(11) Veröffentlichungsnummer: **0 079 323**

**A1**

(12) **EUROPÄISCHE PATENTANMELDUNG**

(21) Anmeldenummer: 82890163.7

(22) Anmeldetag: 05.11.82

(51) Int. Cl.³: **B 28 D 1/06**

(30) Priorität: 06.11.81 AT 4769·81

(43) Veröffentlichungstag der Anmeldung:
18.05.83 Patentblatt 83/20

(84) Benannte Vertragsstaaten:
AT BE CH DE FR GB IT LI LU NL SE

(71) Anmelder: Mayer, Wolfgang
Nonntalerhauptstrasse 102
A-5020 Salzburg(AT)

(72) Erfinder: Mayer, Wolfgang
Nonntalerhauptstrasse 102
A-5020 Salzburg(AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)

(54) Vorrichtung zum Schneiden von plattenförmigen Steinen.

(57) Eine solche Vorrichtung weist ein stabförmiges, mit Schneidkörpern besetztes Schneidwerkzeug (6) auf, das beiderends in einer Werkzeugaufnahme (4) eingespannt und in axialer Richtung hin- und hergehend antreibbar ist.

Um die Schnittleistung zu verbessern und die Standzeit des Schneidwerkzeuges (6) zu erhöhen, wird das Schneidwerkzeug (6) um seine Achse drehbar gelagert und mit einem Drehantrieb (7) verbunden.

*FIG.1*

EP 0 079 323 A1

0079323

(18 338)

- 1 -

Vorrichtung zum Schneiden von plattenförmigen Steinen

Die Erfindung bezieht sich auf eine Vorrichtung zum Schneiden von plattenförmigen Steinen, bestehend aus einem stabförmigen, mit Schneidkörpern besetzten Schneidwerkzeug, das beiderends in einer Werkzeugaufnahme eingespannt und in axialer Richtung hin- und hergehend antreibbar ist.

Eine bekannte Vorrichtung dieser Art (CH-A-18 553) weist einen Sägerahmen auf, in dem mehrere Schneidstäbe parallel nebeneinander eingespannt sind und mit dem Sägerahmen hin- und hergehend angetrieben werden können. Die Schneidstäbe sind dabei mit Schneidkörpern besetzt, die vorteilhaft in ein entsprechendes Bindemittel eingebettet sind. Vorteilhaft gegenüber den üblichen Seilsägen, die ein zu einem endlosen Seilzug geschlossenes und durch den zu bearbeitenden Stein gezogenes Sägeseil besitzen, ist vor allem, daß das stabförmige Schneidwerkzeug wesentlich einfacher gespannt und die Schneidstablänge vergleichsweise kurz gewählt werden kann, was den Platzbedarf solcher Vorrichtungen erheblich herabsetzt. Nachteilig gegenüber den Seilsägen, bei denen dem Sägeseil ein Schneidmittel, beispielsweise Quarzsand, mit Wasser im Schnittbereich zugeführt wird, ist allerdings, daß sich durch die Einbettung der Schneidkörper im Schneidstab bei der Hin- und Herbewegung der Schneidstäbe stets gleiche Schnittspuren ergeben, so daß die Oberflächenqualität der Schnittflächen leidet. Darüber hinaus können die Schneidstäbe nicht voll ausgenützt werden, weil lediglich mit einem Umfangsbereich geschnitten wird. Dazu kommt noch, daß bei einer ungleichmäßigen Abnützung des Schneidstabes über seinen Umfang sich die Standzeit des Schneidstabes nach dem Bereich der größten Abnützung richten muß, was zu unbefriedigenden Standzeiten führt. Insbesondere bei Profilschnitten muß ja mit einer ungleichmäßigen Abnützung der Schneidstäbe gerechnet werden.

Der Erfindung liegt somit die Aufgabe zugrunde, diese Mängel zu vermeiden und eine Vorrichtung zum Schneiden plattenförmiger Steine der eingangs geschilderten Art so zu verbessern, daß nicht nur die Standzeit des Schneidwerkzeuges erhöht und die Schnittqualität angehoben, sondern auch die Schnittleistung mit einfachen technischen Mitteln verbessert werden kann.

Die Erfindung löst die gestellte Aufgabe dadurch, daß das Schneidwerkzeug um seine Achse drehbar gelagert und mit einem Drehantrieb verbunden ist.

Durch das Vorsehen eines zusätzlichen Drehantriebes für das stabförmige Schneidwerkzeug kann zunächst die Schnittgeschwindigkeit wesentlich erhöht werden, weil sich der axialen Schnittbewegung die Drehbewegung des Schneidwerkzeuges überlagert und folglich die Schneidkörper schraubenlinienförmig mit einer resultierenden Geschwindigkeit bewegt werden. Die Drehbewegung des Schneidwerkzeuges stellt dabei eine gleichmäßige Beanspruchung des Schneidwerkzeuges auch über seinen Umfang sicher, was wohl wegen des Schnittanteiles aller Umfangsbereiche unabhängig von der Schnittrichtung keiner besonderen Erklärung bedarf.
Damit wird nicht nur ein vom Abnützungsgrad weitgehend
unabhängiger, gerader Schnittverlauf bei unterschiedlich starken Gesteinsplatten gewährleistet, sondern
auch die Standzeit des Werkzeuges erhöht, die demzufolge
vor allem von den verwendeten Schneidkörpern abhängt.
Die Schnittqualität ist dabei hervorragend, weil durch
die kombinierte Antriebsbewegung eine gute Verteilung
der Schnittspuren der Schneidkörper vorausgesetzt werden
kann.

Je nach der Beschaffenheit der zu bearbeitenden
Natur- oder Kunststeine können verschiedene Schneidwerkzeuge mit hinsichtlich der Art und Form unterschiedlichen Schneidkörpern zum Einsatz kommen. Obwohl für
bestimmte Einsätze die Verwendung von Hartmetall-Schneidkörpern möglich ist, werden für die üblichen Werkstücke
Schneidwerkzeuge vorteilhaft sein, deren Schneidkörper
aus in ein Trägermaterial eingebetteten Schleifkörnern,
vorzugsweise Diamanten, bestehen. Solche Schneidkörper
ergeben hohe Standzeiten, weil durch den verschleißbedingten Materialabtrag des Werkzeuges stets neue Schleifkörner zur Wirkung kommen, bis alle Schneidkörper verbraucht sind. Außerdem können durch in einem Trägermaterial eingebettete Schleifkörner sehr verschiedenartige Werkzeugformen in einfacher Weise verwirklicht
werden, was eine gute Anpassung an unterschiedliche Verhältnisse erlaubt. Wegen der Drehung der Schneidwerkzeuge braucht dabei nicht auf eine gleichmäßige Verteilung der Schneidkörper über den Umfang des Schneidwerkzeuges geachtet zu werden.

Die Anordnung eines Drehantriebes bringt neben der
Zug- und Biegebeanspruchung des Schneidwerkzeuges auch
noch eine Torsionsbeanspruchung mit sich. Da die Torsionsfestigkeit vom Durchmesser des Schneidwerkzeuges abhängt
und dieser Durchmesser auf Grund der Forderung nach einer geringen Schnittstärke klein gehalten werden soll, müssen widersprüchliche Bedingungen berücksichtigt werden. Um trotz eines geringen Durchmessers eine ausreichende Torsionsfestigkeit für das Schneidwerkzeug sicherzustellen, kann das Schneidwerkzeug an beiden Enden mit dem Drehantrieb verbunden sein. Damit wird die Torsionsbeanspruchung des Schneidwerkzeuges erheblich vermindert, was zu ausreichenden Torsionsfestigkeiten auch dünner Schneidwerkzeuge führt. Besonders einfache Konstruktionsverhältnisse ergeben sich dabei, wenn der Drehantrieb aus zwei Motoren besteht, deren Wellen die Werkzeugaufnahme tragen.

Für einen vom Drehantrieb des Schneidwerkzeuges unabhängigen Antrieb für die hin- und hergehende Bewegung des Schneidwerkzeuges kann dadurch gesorgt werden, daß das Schneidwerkzeug in einem Schlitten drehbar gehalten ist, der auf wenigstens einer Führungssäule in Richtung der Drehachse des Schneidwerkzeuges verschiebbar lagert. Da auf dem Schlitten auch der Drehantrieb befestigt werden kann, ist die Antriebsverbindung sowohl zwischen dem Schneidwerkzeug und dem Drehantrieb als auch zwischen dem Schlitten und seinem hin- und hergehenden Antrieb problemlos. Wegen der vergleichsweise großen Massen ist allerdings die Hubfrequenz für den hin- und hergehenden Antrieb des Schlittens begrenzt. Um hier Abhilfe zu schaffen, können die beiden Motoren des Drehantriebes in Richtung der Achse des Schneidwerkzeuges verschiebbar in einem Gestell gelagert und mit einer im Sinne einer gegenseitigen Abstandsvergrößerung der beiden Motoren wirkenden Spanneinrichtung verbunden sein. Durch diese Maßnahmen wird die hin- und hergehend anzutreibende Masse erheblich verringert, ohne den Konstruktionsaufwand zu vergrößern. Die zur Aufnahme der Schnittkräfte im allgemeinen erforderliche Zugspannung für das Schneidwerkzeug wird dabei durch die Spanneinrichtung sichergestellt, die die beiden Motoren bei einer Beaufschlagung auseinanderzudrücken versucht, wobei das zwischen den Werkzeugaufnahmen auf den Wellen der Motoren eingespannte Schneidwerkzeug der gewünschten Zugspannung unterworfen wird, ohne die oszillierende Axialbewegung des Schneidwerkzeuges zu behindern. Sollte die bewegliche Masse für den hin- und hergehenden Antrieb des Schneidwerkzeuges weiter herabgesetzt werden, so könnten die Werkzeugaufnahmen auf den Motorwellen axial verschiebbar gelagert und über die Spanneinrichtung miteinander verbunden werden, was jedoch den konstruktiven Aufwand erhöht.

Obwohl grundsätzlich mechanische Spanneinrichtungen, beispielsweise mit Hilfe eines Spindeltriebes eingesetzt werden können, ergeben sich besonders vorteilhafte Verhältnisse, wenn die Spanneinrichtung aus zwei mit je einem Motor verbundenen, gegengleich beaufschlagbaren Spannzylindern besteht, deren Druckräume miteinander über eine Druckleitung verbunden sind. Diese Ausbildung der Spanneinrichtung ermöglicht nicht nur, die bei der axialen Antriebsbewegung des Schneidwerkzeuges zu bewegende Masse auf ein Minimum zu reduzieren, sondern erlaubt es darüber hinaus, die beiden Motoren während der Verspannung im Ausmaß der Hublänge der Spannzylinder frei zu verschieben, weil das Druckmittel über die Druckleitung zwischen den beiden Spannzylindern verlagert werden kann. Die Spannzylinder können daher ortsfest abgestützt werden.

Damit unter Wahrung einer hohen Schnittqualität die Schnittleistung zusätzlich gesteigert werden kann, kann der Antrieb des Schneidwerkzeuges für die hin- und hergehende Antriebsbewegung aus zwei miteinander antriebsverbundenen Antriebseinheiten bestehen, von denen der eine einen größeren Hub und eine kleinere Hubfrequenz als die andere Antriebseinheit aufweist. Die große Hubfrequenz bei einem vergleichsweise kleinen Hub ergibt trotz vergleichsweise geringer Antriebsenergien eine rasche oszillierende Axialbewegung des Schneidwerkzeuges, so daß die Schnittgeschwindigkeit für die einzelnen Schneidkörper erhöht wird. Außerdem wird durch diese zusätzliche oszillierende Axialbewegung höherer Frequenz die Schnittspurverteilung über die Schnittfläche verbessert, was sich vorteilhaft in der Schnittqualität auswirkt. Um die Schneidlänge des Schneidwerkzeuges ausnützen zu können, wird das Schneidwerkzeug über seine Länge mit geringer Frequenz hin- und herbewegt.

Zur konstruktiven Lösung der beiden Antriebseinheiten wird vorgeschlagen, die Antriebseinheit mit dem größeren Hub und der kleineren Hubfrequenz aus einem Kolbentrieb und die Antriebseinheit mit dem kleineren Hub und der größeren Hubfrequenz aus einem an den Kolbentrieb angeschlossenen Kurbeltrieb aufzubauen. Damit können in technisch einfacher Weise die gewünschten zusammengesetzten Bewegungen in axialer Richtung des Schneidwerkzeuges erzielt werden.

Es braucht wohl nicht näher ausgeführt zu werden, daß eine Kühlung bzw. Schmierung im Schnittbereich vorhanden seil soll. Dies kann in üblicher Weise durch eine äußere Schmier- bzw. Kühlmittelzufuhr erfolgen. Besonders vorteilhafte Verhältnisse werden jedoch erreicht, wenn das Schneidwerkzeug hohl ausgebildet ist und radiale Bohrungen für den Kühl- und Schmiermittelaustritt aufweist. Mit einer solchen Werkzeugausbildung wird nämlich die unmittelbare Voraussetzung geschaffen, daß das Kühl- und Schmiermittel auch tatsächlich in den Schnittbereich gelangt.

In der Zeichnung ist der Erfindungsgegenstand beispielsweise dargestellt. Es zeigen

Fig. 1 eine erfindungsgemäße Vorrichtung zum Schneiden von plattenförmigen Steinen in einer vereinfachten Seitenansicht,

Fig. 2 diese Vorrichtung in Draufsicht, die

Fig. 3 bis 5 verschiedene Schneidwerkzeuge in Seitenansicht,

Fig. 6 eine Konstruktionsvariante einer erfindungsgemäßen Vorrichtung in einer schematischen Draufsicht,

Fig. 7 die Antriebsanordnung der Vorrichtung nach Fig. 6 in Draufsicht in einem größeren Maßstab und

Fig. 8 die Antriebsanordnung nach Fig. 7 in einer Seitenansicht.

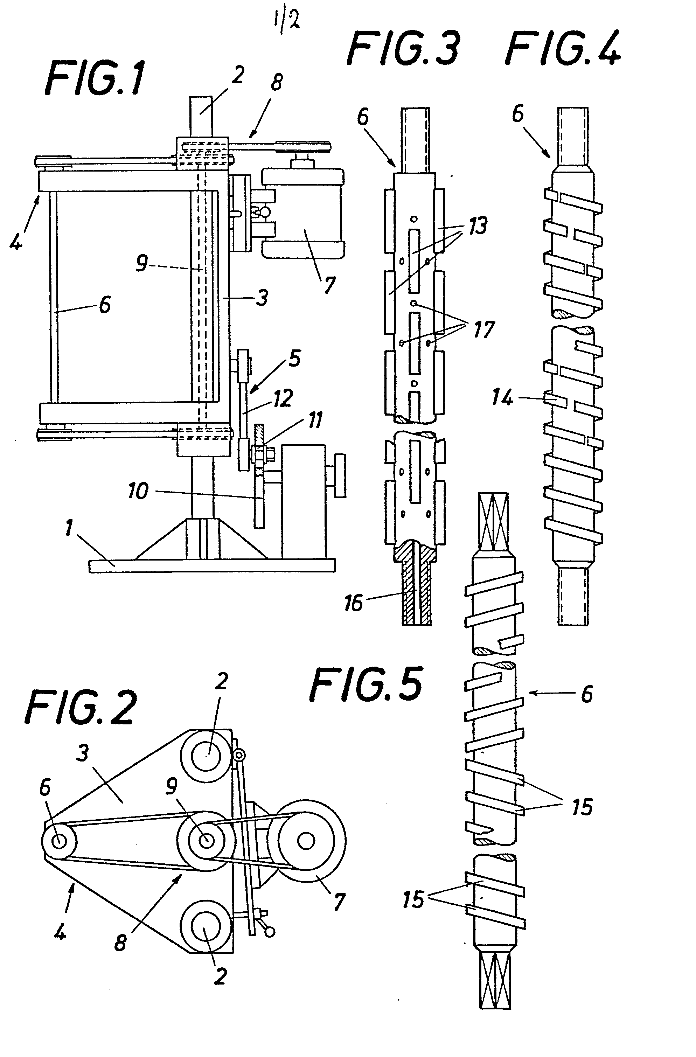

Wie den Fig. 1 und 2 entnommen werden kann, besteht eine erfindungsgemäße Vorrichtung zum Schneiden von Steinen im wesentlichen aus einem Gestell 1, das zwei Führungssäulen 2 für einen Schlitten 3 aufweist, der eine Werkzeugaufnahme 4 trägt. Dieser Schlitten 3 ist auf den Führungssäulen 2 verschiebbar gelagert und mittels eines Antriebes 5 hin- und hergehend antreibbar, der als Schubkurbeltrieb ausgebildet ist. In die Werkzeugaufnahme 4 ist parallel zu den Führungssäulen 2 ein stabförmiges Schneidwerkzeug 6 drehbar eingespannt, das mittels eines Motors 7 über ein Keilriemengetriebe 8 angetrieben wird, das eine sich über den Schlitten 3 erstreckende Antriebswelle 9 aufweist, von der die beiden Enden des Schneidwerkzeuges 6 beaufschlagt werden, so daß das durch den Schneidwiderstand verursachte Torsionsmoment vergleichsweise klein gehalten werden kann. Um das Schneidwerkzeug 6 mit einem geringen Durchmesser ausstatten zu können, ohne auf eine entsprechende Biegesteifigkeit verzichten zu müssen, was von erheblichem Einfluß auch die Schnittführung ist, kann das Schneidwerkzeug 6 in eine Spanneinrichtung eingespannt werden, die entsprechende Zugkräfte auf das Schneidwerkzeug 6 ausübt.

Durch die Überlagerung eines Drehantriebes und eines axial oszillierenden Antriebes wird nicht nur eine hohe Schnittgeschwindigkeit für die einzelnen Schneidkörper des Schneidwerkzeuges 6, sondern auch eine gleichmäßige Abnützung des Schneidwerkzeuges 6 selbst sichergestellt, was sich vorteilhaft auf die Standzeit des Schneidwerkzeuges 6 auswirkt.

Da der Hub der hin- und hergehenden Axialbewegung des Schneidwerkzeuges 6 von der Stärke der zu schneidenden Platten abhängt, ist der Antrieb 5 hinsichtlich seiner Hublänge einstellbar ausgebildet. Zu diesem Zweck weist die Kurbelwange 10 des Schubkurbeltriebes einen Radialschlitz 11 auf, in dem die Pleuelstange 12 verstellbar gelagert ist, so daß über die Verstellung der Anlenkstelle der Pleuelstange 12 an der Kurbelwange 10 die wirksame Kurbelarmlänge an die jeweiligen Verhältnisse angepaßt werden kann.

Grundsätzlich können hinsichtlich der Ausbildung des Schneidwerkzeuges 6 keine Einschränkungen gemacht werden, wenn einerseits eine ausreichende Biegesteifigkeit und anderseits eine entsprechende Standzeit sichergestellt ist. Auf Grund der Möglichkeit der axialen Einspannung des Schneidwerkzeuges und der Verbindung beider Werkzeugenden mit einem Drehantrieb können die Anforderungen an die Biegesteifigkeit und Torsionsfestigkeit der Schneidwerkzeuge vergleichsweise gering gehalten werden. Damit wird der Einsatz dünner Schneidstäbe und sogar dünner Schneidseile möglich, was das Einsatzgebiet der erfindungsgemäßen Vorrichtung stark erweitert. In bezug auf/die Standzeit ergeben sich vorteilhafte Verhältnisse, wenn die Schneidwerkzeuge 6 mit Schneidkörpern besetzt sind, die aus in einem Trägermaterial eingebetteten Schleifkörnern, insbesondere Diamanten, bestehen. Diese in einem Trägermaterial eingebetteten Schleifkörner können mit dem Trägermaterial in an sich beliebigen Formen auf den Schneidwerkzeugen angeordnet werden. Von den möglichen Ausführungsformen sind in den Fig. 3 bis 5 drei Beispiele dargestellt, die über den Umfang des Schneidwerkzeuges 6 verteilte Axialstege 13, die einander in axialer Richtung überlappen, schraubenförmig angeordnete Stege 14 oder Ringe 15 zeigen, die zur Werkzeugachse geneigt verlaufen. Wie Fig. 3 zeigt, brauchen die Schneidkörper nicht über den Umfang des Schneidwerkzeuges 6 gleichmäßig verteilt zu sein, weil wegen der zusätzlichen Werkzeugdrehung alle Schneidkörper gleichermaßen zum Einsatz kommen, und zwar unter Wahrung einer die Schnittqualität günstig beeinflussenden, feinen Schnittspurverteilung über die Schnittfläche.

Aus Fig. 3 kann zusätzlich entnommen werden, daß das Schneidwerkzeug 6 zur Kühl- und Schmiermittelzufuhr eine Axialbohrung 16 mit radialen Austrittsbohrungen 17 aufweisen kann, so daß das Kühl- und Schmiermittel unmittelbar im Bereich der Schnittstelle austritt.

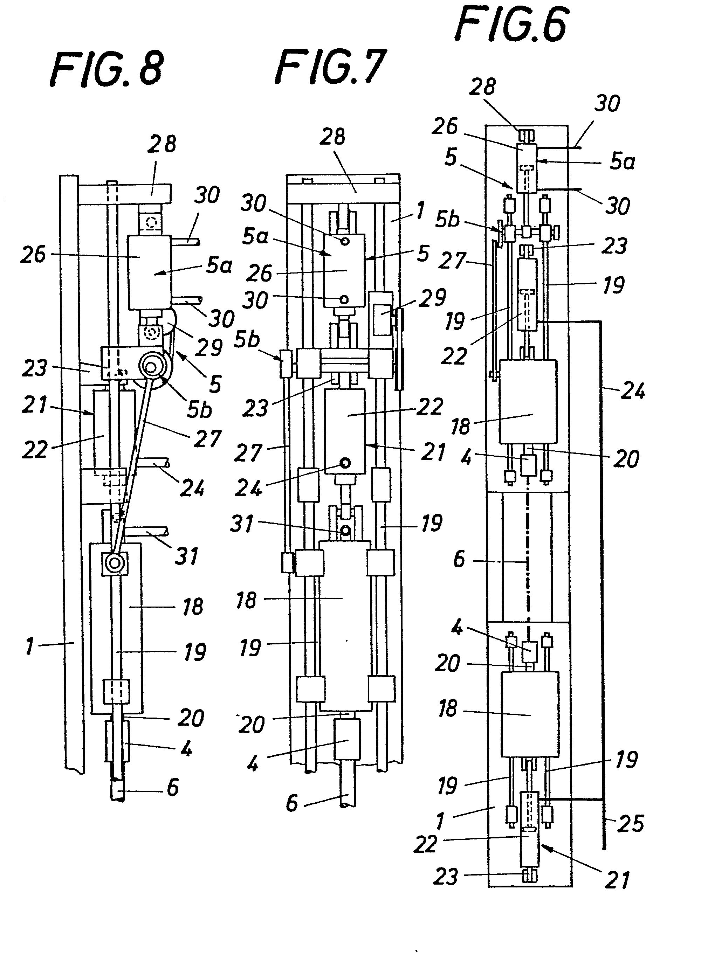

Obwohl die Konstruktion nach den Fig. 6 bis 8 grundsätzlich nach der gleichen Wirkungsweise wie die Konstruktion gemäß den Fig. 1 und 2 arbeitet, kann mit dieser Konstruktion eine wesentlich höhere Schnittleistung erzielt werden, weil einerseits die für die oszillierende Axialbewegung des Schneidwerkzeuges 6 notwendigerweise zu bewegenden Massen klein gehalten werden können und anderseits der langhubigen Axialbewegung des Schneidwerkzeuges 6 über die Schneidlänge eine kurzhubige Schwingbewegung erheblich höherer Frequenz überlagert werden kann.

Gemäß der in den Fig. 6 bis 8 dargestellten Konstruktion wird nämlich für die Axialbewegung des Schneidwerkzeuges kein den Drehantrieb für das Schneidwerkzeug 6 tragender Schlitten 3 verwendet, sondern es werden vielmehr die beiden den Drehantrieb bildenden Motoren 18 unmittelbar verschiebbar auf dem Gestell 1 gelagert, das zu diesem Zweck Führungsschienen
19 trägt. Diese auf den Führungsschienen 19 verschiebbaren Motoren 18 weisen auf ihren Wellen 20 die Werkzeugaufnahmen 4 auf, zwischen denen das Werkzeug 6 eingespannt wird. Damit auf das Werkzeug 6 eine entsprechende Zugspannung ausgeübt werden kann, sind die beiden
Motoren 18 mit einer Spanneinrichtung 21 verbunden, die
bei ihrer Beaufschlagung die beiden Motoren 18 auseinanderzudrücken versucht, wobei das in den Werkzeugaufnahmen 4 eingespannte Schneidwerkzeug 6 schneidgerecht gespannt wird. Diese Spanneinrichtung 21 besteht
im Ausführungsbeispiel aus zwei den beiden Motoren 18 zugeordneten Spannzylindern 22, die sich über Widerlager
23 am Gestell 1 abstützen. Die Druckräume der beiden
Spannzylinder 22 sind dabei über eine Druckmittelleitung
24 verbunden und können über eine Speiseleitung 25 an
eine nicht dargestellte Druckmittelquelle angeschlossen
werden, wobei die gewünschte Verspannung der Motoren 18
eintritt. Trotz dieser Verspannung bleiben die Motoren
18 im Ausmaß der Hublänge der Spannzylinder 22 frei verschiebbar, da das Druckmittel bei einer Motorenverschiebung zwischen den Spannzylindern 22 verlagert wird.

Zum Antrieb der Motoren 18 in Richtung der Drehachse des Schneidwerkzeuges 6 dient der Antrieb 5, der
im Gegensatz zum Verschiebeantrieb nach den Fig. 1 und 2
aus zwei Antriebseinheiten 5a und 5b zusammengesetzt ist.
Diese Antriebseinheiten 5a und 5b bestehen aus einem
Kolbentrieb 26 mit einem an die Schneidlänge des Schneidwerkzeuges 6 angepaßten Hub und aus einem Kurbeltrieb
27, dessen Hub wesentlich geringer, dessen Hubfrequenz
aber erheblich größer ist. Da die Antriebseinheit 5a über
ein Lager 28 am Gestell 1 abgestützt und die Antriebseinheit 5b, die an dem einen Motor 18 angreift, mit der Antriebseinheit 5a antriebsverbunden ist, was durch die verschiebbare Lagerung der Antriebseinheit 5b auf den Führungsschienen 19 ermöglicht wird, ergibt sich eine Überlagerung der beiden axialen Antriebsbewegungen. Der Motor 29 für die Antriebseinheit 5b ist mit der Antriebseinheit 5b zu einem auf den Führungsschienen 19 verschiebbaren Baukörper zusammengefaßt und muß ebenfalls durch den Kolbentrieb 26 angetrieben werden. Die durch den Motor 29 vergrößerte Masse spielt jedoch für den Antrieb des Schneidwerkzeuges 6 in axialer Richtung kaum eine Rolle, weil der Kolbentrieb 26, der über die Leitungen 30 beaufschlagt wird, eine vergleichsweise kleine Hubfrequenz aufweist. Die für die Schnittbewegung maßgeblichere Axialbewegung des Schneidwerkzeuges 6 wird über den Kurbeltrieb 27 erzeugt, wobei die Masse des Motors 29 für den Kurbeltrieb 27 keine Rolle spielt. Für die Schnittbewegung der Schneidwerkzeuge 6 erhält man folglich eine aus einer oszillierenden axialen Schwingung und einer Drehbewegung zusammengesetzte Bewegung, so daß eine hohe Schnittgeschwindigkeit bei guter Schnittqualität und eine lange Standzeit der Schneidwerkzeuge gewährleistet werden können.

Zur Kühlung und Schmiermittelzufuhr können nach Fig. 3 die Schneidwerkzeuge 6 mit einer Axialbohrung 16 für die Kühl- und Schmiermittelzufuhr versehen sein. Damit das Kühl- und Schmiermittel dem eingesetzten Schneidwerkzeug auch tatsächlich zugeführt werden kann, ist die Welle 20 zumindest eines der beiden Motoren 18 für die Schmier- und Kühlmittelzufuhr hohl ausgebildet und an eine Versorgungsleitung 31 angeschlossen. Mit der Kühl- und Schmiermittelzufuhr durch die hohle Welle 20 des Motors 18 ergeben sich trotz der Drehbewegung des Schneidwerkzeuges 6 einfache Anschlußverhältnisse.

0079323

- 12 -

Patentansprüche:

1. Vorrichtung zum Schneiden von plattenförmigen Steinen, bestehend aus einem stabförmigen, mit Schneidkörpern besetzten Schneidwerkzeug (6), das beiderends in einer Werkzeugaufnahme (4) eingespannt und in axialer Richtung hin- und hergehend antreibbar ist, dadurch gekennzeichnet, daß das Schneidwerkzeug (6) um seine Achse drehbar gelagert und mit einem Drehantrieb (7,18) verbunden ist.

2. Vorrichtung nach Anspruch 1, dadurch gekennzeichnet, daß das Schneidwerkzeug (6) an beiden Enden mit dem Drehantrieb (7,18) verbunden ist.

3. Vorrichtung nach Anspruch 2, dadurch gekennzeichnet, daß der Drehantrieb aus zwei Motoren (18) besteht, deren Wellen (20) die Werkzeugaufnahme (4) tragen.

4. Vorrichtung nach einem der Ansprüche 1 bis 3, dadurch gekennzeichnet, daß das Schneidwerkzeug (6) in einem Schlitten (3) drehbar gehalten ist, der auf wenigstens einer Führungssäule (2) in Richtung der Drehachse des Schneidwerkzeuges (6) verschiebbar lagert.

5. Vorrichtung nach Anspruch 3, dadurch gekennzeichnet, daß die beiden Motoren (18) des Drehantriebes in Richtung der Achse des Schneidwerkzeuges (6) verschiebbar in einem Gestell (1) gelagert und mit einer im Sinne einer gegenseitigen Abstandsvergrößerung der beiden Motoren wirkenden Spanneinrichtung (21) verbunden sind.

6. Vorrichtung nach Anspruch 5, dadurch gekennzeichnet, daß die Spanneinrichtung (21) aus zwei mit je einem Motor (18) verbundenen, gegengleich beaufschlagbaren Spannzylindern (22) besteht, deren Druckräume miteinander über eine Druckleitung (24) verbunden sind.

7. Vorrichtung nach einem der Ansprüche 1 bis 6, dadurch gekennzeichnet, daß der Antrieb (5) des Schneidwerkzeuges (6) für die hin- und hergehende Antriebsbewegung aus zwei miteinander antriebsverbundenen Antriebseinheiten (5a,5b) besteht, von denen die eine einen größeren Hub und eine kleinere Hubfrequenz als die andere Antriebseinheit (5b) aufweist.

8. Vorrichtung nach Anspruch 7, dadurch gekennzeichnet, daß die Antriebseinheit (5a) mit dem größeren Hub und der kleineren Hubfrequenz aus einem Kolbentrieb (26) und die Antriebseinheit (5b) mit dem kleineren Hub und der größeren Hubfrequenz aus einem an den Kolbentrieb (26) angeschlossenen Kurbeltrieb (27) bestehen.

9. Vorrichtung nach einem der Ansprüche 1 bis 8, dadurch gekennzeichnet, daß das Schneidwerkzeug (6) hohl ausgebildet ist und radiale Bohrungen (17) für den Kühl- und Schmiermittelaustritt aufweist.

FIG.1

FIG.2

FIG.3

FIG.4

FIG.5

FIG.8　FIG.7　FIG.6

Europäisches
Patentamt

EUROPÄISCHER RECHERCHENBERICHT

0079323
Nummer der Anmeldung

EP 82 89 0163

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. 3) |
|---|---|---|---|
| X | CH-A- 546 618 (BOCCADORO) <br> * Insgesamt * | 1-4 | B 28 D 1/06 |
| A | DE-B-1 192 546 (THIELOW) <br> * Spalte 2, Zeile 36 - Spalte 3, Zeile 30; Figuren * | 3,6 | |
| A | US-A-3 976 045 (COGGINS) | | |
| A | DE-C- 146 868 (FERNANDEZ) | | |
| A | US-A-2 922 217 (KRIZ) | | |
| A | CH-A- 313 206 (WINTER) | | RECHERCHIERTE SACHGEBIETE (Int. Cl. 3) |
| A | GB-A- 633 390 (McCLURE) | | B 24 B <br> B 23 D <br> B 27 B <br> B 28 D |

Der vorliegende Recherchenbericht wurde für alle Patentansprüche erstellt.

| Recherchenort <br> DEN HAAG | Abschlußdatum der Recherche <br> 01-02-1983 | Prüfer <br> PEETERS S. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument. das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82